# EUROPÄISCHE PATENTSCHRIFT

(11) **EP 2 451 325 B1**
(45) Veröffentlichungstag und Bekanntmachung des Hinweises auf die Patenterteilung: **27.09.2017**
(21) Anmeldenummer: 10732858.5
(22) Anmeldetag: 01.07.2010
(51) Int. Cl.: A47J 31/54

(54) **SICHERHEITSMECHANISMUS FÜR GETRÄNKEBEREITER UND DESSEN HERSTELLUNGSVERFAHREN**
SAFETY MECHANISM FOR BEVERAGE-MAKING DEVICES AND THE PRODUCTION METHOD THEREOF
MÉCANISME DE SÉCURITÉ POUR APPAREILS À PRÉPARER DES BOISSONS ET PROCÉDÉ DE FABRICATION CORRESPONDANT

(30) Priorität: 06.07.2009 DE 102009031757; 29.06.2010 DE 102010025398
(43) Veröffentlichungstag der Anmeldung: 16.05.2012
(73) Patentinhaber: Meyl, Hendrik, 81243 München (DE)
(72) Erfinder: Meyl, Hendrik, 81243 München (DE)
(86) Internationale Anmeldenummer: PCT/EP2010/003978
(87) Internationale Veröffentlichungsnummer: WO 2011/003542

(56) Entgegenhaltungen:
- EP-A1- 1 552 776
- US-A- 4 386 109

## Beschreibung

Die Erfindung liegt auf dem Gebiet der Getränkebereitung, insbesondere der Bereitung von Heißgetränken mittels einer heißen, unter Druck stehenden Flüssigkeit.

Die Verwendung von unter Druck stehenden Flüssigkeiten zur Extraktion eines Getränkegrundstoffes führt zu einem erhöhten Bedarf an Sicherheitsvorkehrungen. Hierbei ist ein vorrangiger Aspekt die Beschränkung des Druckes innerhalb des Braubehälters. Im Braubehälter ist die Brauflüssigkeit zu Bereitungsbeginn des Getränkes vorhanden und wird darin in den gewünschten Zustand versetzt.

Natürlicherweise sind hierbei zwei Ansatzweisen möglich: Die Beschränkung der Druckerhöhung und die gezielte Drucksenkung. Da der Gebraucher oftmals den Brauprozess nicht genügend überwachen kann oder es schlichtweg vernachlässigt, die Beschränkung der Druckerhöhung verlässlich vorzunehmen, sind Maßnahmen zur automatischen Drucksenkung unerlässlich.

Zur Beurteilung der Notwendigkeit eines druckregulierenden Mechanismus sei insbesondere die Zubereitungsweise von Espresso zu beachten. Ein typischer Espresso hat ein Volumen zwischen 22,5 ml und 27,5 ml und entsteht durch eine 22,5 bis 27,5 Sekunden lange Extraktion aus 6,5 g bis 7,5 g gleichmäßig und fein gemahlenem Getränkegrundstoff aus stark gerösteten Kaffeebohnen (Espressoröstung) mit ca. 86° C bis 90° C heißer Brauflüssigkeit unter 800 kPa bis 1 MPa Druck. Die Getränketemperatur in dem Auffangbehälter beträgt idealerweise zwischen 64° C und 70° C.

Die Druckbegrenzung wird durch das kontrollierte Ableiten von im Braubehälter entstehenden Gasen und/oder Flüssigkeiten bewirkt.

Das amerikanische Patent US 4386109 (Bowen et al.) beschreibt einen Heißgetränkebereiter, in dem ein handelsübliches Überdruckventil mit Ball und Feder eingesetzt ist. Damit der Braubehälter zur Befüllung stabil stehen kann, ist ein goßer Teil des Braubehälters versenkt um dort das Überdruckventil einzusetzen.

Im amerikanischen Patent US 5884551 (Orrico et al.) wird ein Überdruckventil beschrieben, das als Umleitung der Braukammer funktioniert. Eine Gummidichtung verbiegt sich ab einer gewissen Druckdifferenz zwischen Braukammer und Umgebung und gibt so den Weg für die Flüssigkeit frei. Diese Vorrichtung ist für Überdrücke bis ca. 414 kPa geeignet. Nachteil ist, dass durch den schnellen Abfluss der Flüssigkeit die Brauzeit signifikant reduziert wird, und dass durch die Verwendung der Gummidichtung der Ansprechdruck des Sicherheitsmechanismus nur sehr ungenau einstellbar ist.

Die PCT Patentanmeldung WO 91/12757 (Yu) offenbart einen Kaffeebereiter mit einem zweistufigem Ventilsystem, das in Abhängigkeit vom Druck in der Braukammer öffnet. Bei Erreichen des regulären Arbeitsdruckes öffnet sich die Flüssigkeitsbarriere in Richtung der Filterkammer, und bei Übersteigen des Sicherheitsdruckes öffnet sich die Gasbarriere zur Atmosphäre. Durch das Einstellen der Vorspannung der im Ventilsystem enthaltenen Feder durch den Gebraucher werden die Öffnungsschwellen der Ventile gekoppelt eingestellt. Dies hat zur Folge, dass der Sicherheitsdruck sehr unterschiedlich eingestellt werden kann, und dadurch signifikanten Konsequenzen für den Brauprozess und folglich für die Getränkequalität entstehen. Des Weiteren ist die Änderung des Sicherheitsdruckes durch den Gebraucher sicherheitstechnisch bedenklich.

In der amerikanischen veröffentlichten Patentanmeldung US 2004/0020922 (Alves) wird ein Einkammer-Getränkebereiter beschrieben, der im Braubehälter ein Überdruckventil enthält. Das Ventil ist ein mit einem federnden Kunststoffstift mit halbkugelförmigen Verschluss verschlossenes Loch im Boden des Braubehälters. Dieser Mechanismus lässt nur die grobe Regulierung des Überdrucks zu. Des Weiteren ist diese Vorrichtung sehr stark Fertigungstoleranzen und Alterungserscheinungen des federnden Plastikstiftes ausgesetzt, wodurch auf Dauer die Funktionstüchtigkeit des Sicherheitsmechanismus nicht gewährleistet werden kann.

In der deutschen Offenlegungsschrift DE 3742507 (Hirsch) wird ein Sicherheitsmechanismus beschrieben, der durch das Lösen des Braubehälterverschlusses den Austritt des Braukammerinhaltes bewirkt. Die Gebrauchssicherheit des Getränkebereiters ist hierdurch gewährleistet, allerdings auf Kosten des zu bereitenden Getränkes. Dieses ist bei Ansprechen des Sicherheitsmechanismus nicht mehr zum Konsum geeignet, da der Deckel und der Kaffeesatz es verunreinigen.

Die Europäische Norm EN 13248:2002 beschreibt Haushalts-Kaffeebereiter mit einer Sicherheitseinrichtung, die als eigenständiges Element eingesetzt ist, und sich genau dort befindet, wo der Dampf im Getränkebereiter entsteht. Der Druck im Braubehälter beträgt maximal 400 kPa.

Eine mögliche Heizmethode bei der Bereitung von Heißgetränken ist die Verwendung elektromagnetischer Strahlung. Hierbei ist die Abschirmung von nicht zu erhitzenden Teilen zu beachten. Bestehende Methoden, wie z.B. in den Patenten US 2601067 (Spencer) und US 4386109 (Bowen et al.) beschrieben, sind die Verwendung von solidem Metall oder einer leitenden Beschichtung um die entsprechenden Bereiche von der elektromagnetischen Strahlung abzuschirmen. Ebenfalls bekannt ist die Eigenschaft von elektromagnetischer Strahlung, sich durch Öffnungen, die eine bestimmte Größe unterschreiten, nicht fortpflanzen zu können.

Zuletzt ist festzustellen, dass in allen bekannten Anwendungen das Design, also die ästhetische Anmutung und Haptik des Espressobereiters, von der technischen Vorrichtung maßgebend bestimmt ist. Eine weitgehende Trennung von Design und der technischen Funktion der Getränkebereiter ist bisher nicht ermöglicht worden. Dies wird unter anderem durch die Verwendung eines fertigen oder angesetzten, nicht integrierten Sicherheitsmechanismus verursacht und hat zufolge, dass die Geräte vorwiegend unästhetisch sind und dadurch keine Marktakzeptanz finden.

Ziel der Erfindung ist die Verbesserung der Sicherheit von Getränkebereitern, insbesondere von Getränkebereitern, die mittels einer heißen, unter Druck stehenden Flüssigkeit einen Getränkegrundstoff extrahieren bzw. auflösen.

Ein anderes Ziel der Erfindung ist die Bereitstellung eines Sicherheitsmechanismus, der auch bei höheren Braudrücken verlässlich funktioniert, sowohl in seinem passiven, d.h. den Druck nicht regulierdenden Zustand, als auch in seinem aktiven, d.h. den Druck regulierdenden Zustand.

Ein weiteres Ziel der Erfindung ist das Erreichen einer günstigen und fehlerfreien Herstellungsweise von Sicherheitsmechanismen in Getränkebereitern.

Ebenso ist ein Ziel der Erfindung, die äußerliche Anmutung von Getränkebereitern zu verbessern bzw. mehr Raum für die designerische Ausgestaltung zu schaffen.

Die Erfindung findet Anwendung in allen Getränkebereitern, die einen Druckbehälter enthalten oder bei denen beim Bereitungsprozess ein normalerweise druckfreier Behälter unter Druck stehen kommen könnte.

Ebenso ist die Erfindung in allen Heißgetränkebereitern anwendbar, sei es mit einer unabhängigen, also nicht Teil des Bereiters formende oder abhängigen, also Teil des Bereiters formende Energiequelle. Hierbei ist die Notwendigkeit bei Getränkebereitern, die mittels einer heißen, unter Druck stehenden Flüssigkeit einen Getränkegrundstoff extrahieren bzw. auflösen, offensichtlich.

Insbesondere findet die Erfindung Verwendung in kleinen Systemen, die ausschließlich einzelne Getränkeportionen zubereiten. Eine einzelne Getränkeportion ist die Menge, die für genau eine Person zum direkten Konsum zubereitet wird.

Des Weiteren ist die Erfindung auch auf Getränkebereiter anwendbar, die mit elektromagnetischer Strahlung als Heizquelle arbeiten.

Die Erfindung ist ein Sicherheitsmechanismus für Getränkebereiter, die mittels einer heißen, unter Druck stehenden Flüssigkeit einen Getränkegrundstoff extrahieren bzw. auflösen. Der Druckbehälter des Getränkebereiters enthält eine nach innen zeigende topfförmige Ausbildung, in die von außen der druckregulierende Mechanismus eingefügt ist und mit einem Verschluss plan verschlossen ist. Der Verschluss weist keine Löcher auf, sondern bildet mit dem Druckbehälter Zwischenräume, die als Dampfableitungskanäle wirken. Der Auslass der Gase am Getränkebereiter befindet sich fast unsichtbar bei einem Übergang zweier Teile.

Abbildungen 1 bis 5 zeigen verschiedene Ausführungen der Erfindung:
**Abbildung 1** zeigt eine erste Ausführung der Erfindung;
**Abbildung 2** zeigt eine Explosionsdarstellung der ersten Ausführung der Erfindung.
**Abbildung 3** zeigt den Schnitt A-A in Abbildung 1;
**Abbildung 4** zeigt den Schnitt B-B in Abbildung 1.
**Abbildung 5** zeigt eine zweite Ausführung der Erfindung, so wie sie auch zur Verwendung mit einer elektromagetische Strahlung emmittierenden Heizquelle verwendbar ist;
**Abbildung 6** zeigt eine dritte Ausführung der Erfindung entlang des Schnittes in Abbildung 7;
**Abbildung 7** zeigt die dritte Ausführung der Erfindung entlang des Schnittes in Abbildung 6;
**Abbildung 8** zeigt eine Explosionsdarstellung der dritten Ausführung der Erfindung;
**Abbildung 9** zeigt die Draufsicht auf den Braubehälter der dritten Ausführung der Erfindung ohne Verschluss;
**Abbildung 10** zeigt den Verschluss der dritten Ausführung entlang des Schnittes in Abbildung 8;
**Abbildung 11** zeigt eine vierten Ausführung des Verschlusses;
**Abbildung 12** zeigt eine fünften Ausführung der Erfindung;
**Abbildung 13** zeigt den Verschluss der fünften Ausführung der Erfindung, gerade oberhalb des Verschließmechanismus geschnitten.
**Abbildung 14** zeigt den Braubehälter zur fünften Ausführung der Erfindung;
**Abbildung 15** zeigt die fünfte Ausführung des Verschlusses beim Ansprechen der Sicherheitsvorrichtung.

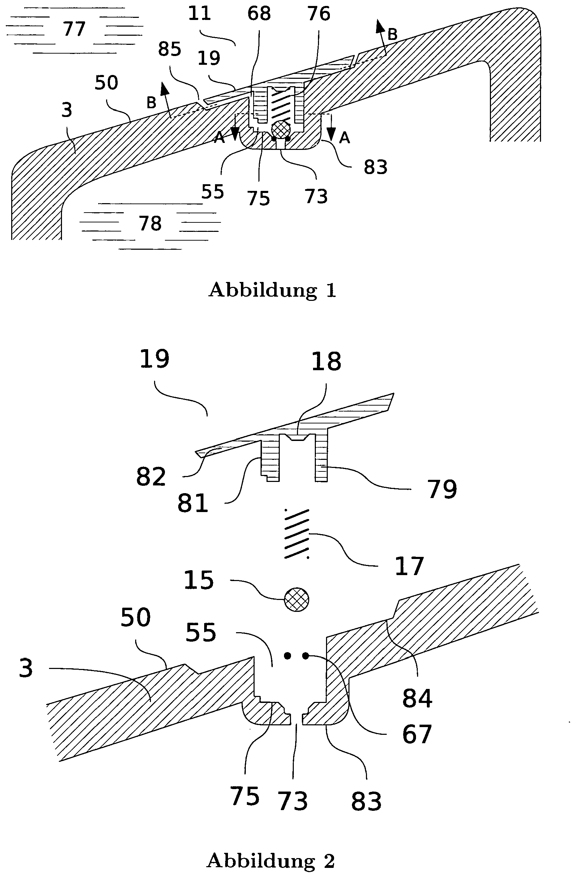

Der in Abbildung 1 gezeigte Ausschnitt eines Braubehälters (3) zeigt eine Ausführung des erfindunsgemäßen Sicherheitsmechanismus (11). Die Abbildung 2 zeigt eine Explosionsdarstellung des Sicherheitsmechanismus (11). Der Braubehälter (3) besitzt eine topfförmige Vertiefung (55), die auf der zum Braubehälterinneren (78) zeigenden Seite ihren Boden (75) hat und auf der zur Atmosphäre (77) zeigenden Seite offen ist. Ist die Dicke der Braubehälterwand nicht ausreichend, um den gesamten Sicherheitsmechanismus (11) zu beherbergen, so besteht die Möglichkeit, durch den Einsatz einer substanziell zylindrischen Anfügung (83) auf der Seite des Braubehälterinneren (78) genügend Material zum Umschließen der topfförmigen Vertiefung (55) zu schaffen.

Der Boden (75) der Vertiefung (55) enthält mindestens ein Loch (73), das den Austausch von Gasen und/oder Flüssigkeiten zwischen Braubehälterinneren (78) und der topfförmigen Vertiefung (55) derart erlaubt, dass der Druck im Braubehälterinneren (78) bei der vorgesehenen Heizleistung der Heizvorrichtung unterhalb des vorgegebenen Sicherheitsdruckes bleibt.

In der Vertiefung (55) ist ein druckregulierender Mechanismus (76) eingefügt, der den Druck im Braubehälterinneren (78) bei oder unterhalb der vorgesehenen Heizleistung der Heizvorrichtung durch Öffnen regelt, sodass der Druck unterhalb des vorgegebenen Sicherheitsdruckes bleibt. Die topfförmige Vertiefung (55) ist mit einem Verschluss (19) verschlossen, der den druckregulierenden Mechanismus (76) in der Vertiefung (55) arretiert.

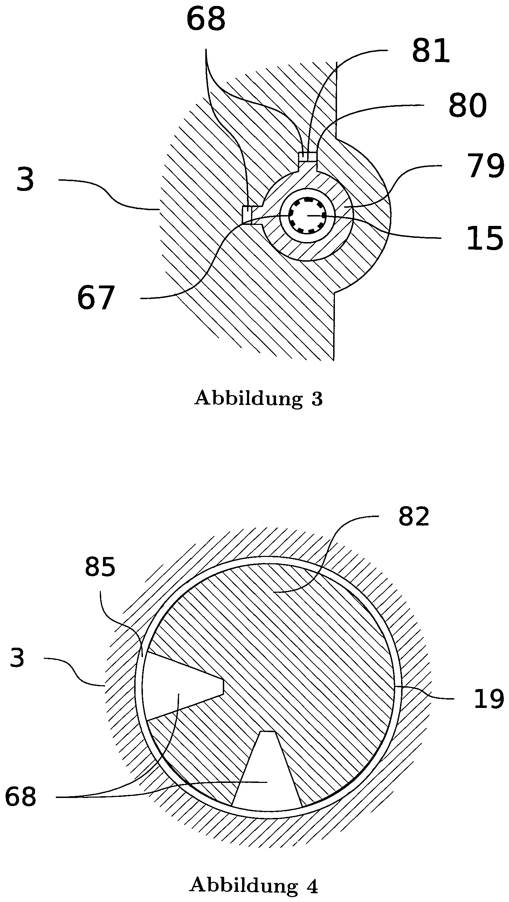

Wie auch detailliert in Abbildungen 3 und 4 dargestellt ist, weist der Verschluss (19) keine Löcher auf. Solche Löcher werden üblicherweise zur Ableitung des Dampfes beim Öffnen des druckregulierenden Mechanismus (76) verwendet. An deren Stelle sind zur Ableitung des Dampfes zwischen dem Braubehälter (3) und dem Verschluss (19) ein oder mehrere Dampfableitungskanäle (68) gebildet, die in den Dampfauslassschlitzen (85) an der Braubehälteraußenseite münden. Diese Dampfableitungskanäle (68) sind hierin den gezeigten Ausführungen der Erfindung eine Fortführung der Führungsnuten (80) (siehe unten), sie können aber auch willkürliche Formen annehmen.

Der Verschluss (19) besteht aus einer Verschlussblende (82), an die ein hohler, offener Zylinder (79) fest angefügt ist. Dieser Zylinder (79) klemmt den Verschluss (19) in der Vertiefung (55) des Braubehälters (3) fest und enthält den druckregulierenden Mechanismus (76). Andere Arten der Befestigung des Verschlusses (19) sind möglich, z. B. durch Verschweißen von Komponenten oder durch Verwendung eines Gewindes. Die Verschlussblende (82) fügt sich in eine im Braubehälter vertiefte Mulde (84), sodass die Oberfläche (50) des Braubehälters (3) plan bleibt, d. h. Oberfläche (50) des Braubehälters (3) und Verschlussblende (82) bilden im Wesentichen eine ebene Oberfläche. Ist das Design des Braubehälters(3) anders, so wird die Blende (82) darauf angepasst. Es ist zu beachten, dass die Verschlussblende (82) auch anders konstruiert sein kann, als in den hier gezeigten Ausführungen. Besonders ist der Fall zu betrachten, dass die Verschlussblende (82) genau so groß ist, wie die Grundfläche des Zylinders (79).

An Zylinder (79) sind eine oder mehrere Führungsschienen (81) angefügt, die in entsprechende Führungsnuten (80) in der Vertiefung (55) greifen. Diese Führungsschienen (81) sind so angeordnet, dass der Verschluss (19) auf nur einer Art und Weise in den Braubehälter (3) eingefügt werden kann und er sich bei der Montage innerhalb gewisser Grenzen automatisch ausrichtet, um die Fehleranfälligkeit der Montage zu verringern. Das Letztere kann durch die Gestaltung der Führungsschienen (81) verstärkt werden, z. B. indem diese sich am unteren Ende verjüngen.

Der druckregulierende Mechanismus (76) besteht in den dargestellten Ausführungen aus einer Ventilkugel (15), die durch eine vorgespannte Feder (17) gegen das Loch (73) gedrückt wird. Für eine bessere Dichtung zwischen Loch (73) und Kugel (15) ist ein O-Ring (67) eingesetzt, auf den, je nach Arbeitsbedingungen des Sicherheitsmechanismus (11), auch verzichtet werden kann. Um die Feder (17) genauer an ihrem Platz zu halten, z. B. weil die Feder kleiner ist als der Verschlusszylinder, kann wahlweise eine Federhalterung (18) verwendet werden, die beispielsweise eine kegelstumpfförmige Form hat und die Feder (17) auf deren Seiten anliegt und dadurch zentriert wird.

Sollte der Druck im Inneren (78) des Braubehälters (3) derart ansteigen, dass die Kraft des Dampfdrucks, der auf Kugel (15) wirkt, größer ist als die Vorspannung der Feder (17), so hebt sich die Kugel (15) an und gibt den Weg für den Dampf vom Braubehälterinneren (78) über die Dampfableitungskanäle (68) zur Atmosphäre (77) frei.

Eine nicht dargestellte Alternative zum druckregulierenden Mechanismus (76) ist, dass der Verschluss (19) derart in der Vertiefung befestigt ist, dass bei Übersteigen des Regeldrucks der Verschluss (19) anhebt, und so den Weg zwischen Braubehälterinneren (78) und Atmosphäre (77) freigibt. Hier sind verschiedenste Ausführungen möglich, z. B. dass die Bewegung durch Federung gesteuert wird, dass der Mechanismus vom Gebraucher manuell zurückgesetzt werden muss oder dass der Verschluss (19) vollständig sich vom Braubehälter (3) trennt.

Eine weitere nicht dargestellte Ausführung der Erfindung ist, den oben beschriebenen Mechanismus mit einer zweiten Sicherheitsstufe zu erweitern. Hierbei hat der Boden (75) der topfförmigen Ausformung mindestens ein zweites Loch oder Schlitz, das oder der normalerweise vom eingesetzten Verschluss (19) verschlossen ist. Sollte der Druck im Braubehälter derartig vehement steigen, dass der primäre druckregulierende Mechanismus (76) überfordert ist, z. B. durch eine stärker als vorgesehene Heizquelle, so löst sich der Verschluss (19), wie schon oben beschrieben, aus seiner Verankerung und gibt dabei nun auch weitere Löcher oder Schlitze zur Dampfableitung frei.

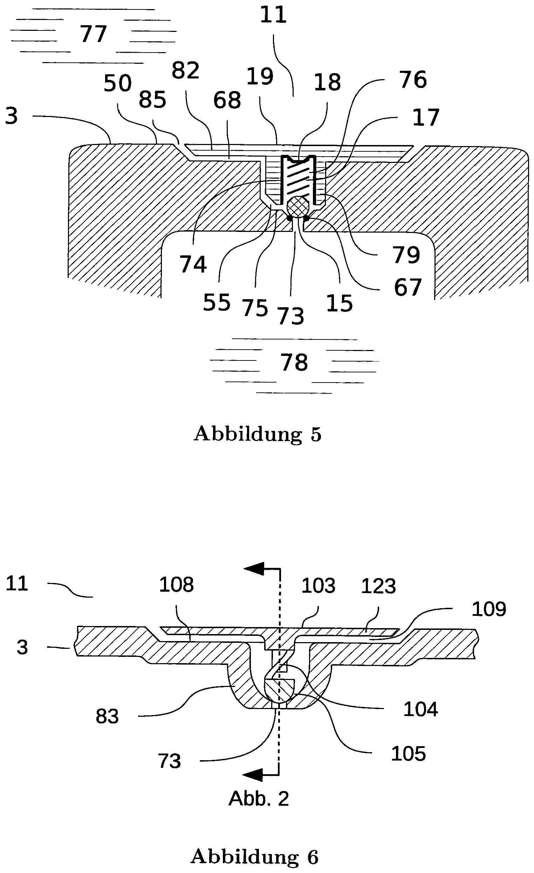

In Abbildung 5 ist eine Ausführungsform der Erfindung dargestellt, die auch für die Verwendung von elektromagnetischer Strahlung geeignet ist. Hier ist der druckregulierende Mechanismus (76) in einen die elektromagnetischen Strahlen abschirmenden, auf einer Seite geschlossenen Zylinder (74) eingesetzt, der wiederum in den Verschluss (19) eingesetzt ist. Durch diese Abschirmung ist die Verwendung von einer Feder (17) aus Metall im Zusammenspiel mit elektromagnetischer Strahlung unbedenklich.

Der in den Abbildungen 1 und 5 gezeigte Sicherheitsmechanismus (11) kann in Getränkebereitern verwendet werden, die über Spritzgussverfahren hergestellt werden. Dadurch sind keine speziellen Fertigungsmethoden für den Sicherheitsmechanismus (11) notwendig und die Herstellung des Sicherheitsmechanismus (11) besonders günstig. Da für die Fertigung mittels Spritzgießen eine Entformung erforderlich ist, ist im Fall, dass die Braubehälterwand, wie gezeigt, schräg zur Entformungsrichtung ist, auch der Mechanismus schräg in Relation zur Braubehälterwand. Dies hat zur Folge, dass der Zylinder (79) schräg auf der Verschlussblende (82) angeordnet ist.

Die Materialwahl der Vorrichtung ist im allgemeinen arbiträr. Die verwendeten Materialien sollten allerdings auf jeden Fall lebensmittelecht sein und die organoleptischen Eigenschaften des Nahrungsmittels nicht ändern.

Des Weiteren empfiehlt es sich, bei Verwendung unter elektromagnetischer Strahlung, die Materialien so auszuwählen, dass möglichst wenig unzweckmäßige Erwärmungen auftreten. Wie oben gezeigt, kann bei Fällen, die dies nicht zulassen, durch gezielte Abschirmung die Erwärmung auf ein akzeptables Niveau bishin zur gänzlichen Vermeidung reduziert werden.

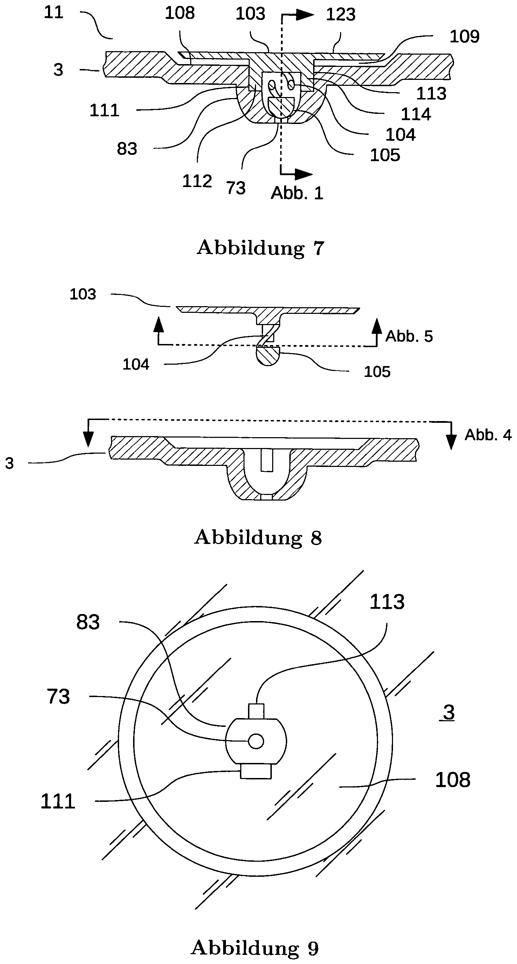

Abbildung 6 bis 10 zeigen eine dritte Ausführung der erfindungsgemäßen Sicherheitsvorrichtung (11). Der Braubehälter (3) des Getränkebereiters enthält eine mit einem Ventilloch (73) versehene topfförmige Vertiefung (83), die mit dem Verschluss (103) derart verschlossen wird, dass ein Dampfablassspalt (109) frei bleibt.

Der Verschluss (103) besteht aus der Blende (123), dem Federmechanismus (104) und dem Verschließmechanismus (105), die permanent miteinander Verbunden sind. Der Federmechanismus (104) verbindet Blende (123) mit dem elastischen Verschließmechanismus (105), der das Ventilloch (73) verschließt. Hierdurch ist die Endmontage der Sicherheitsvorrichtung (11) des Getränkebereiters besonders einfach: Sie besteht lediglich aus dem Einfügen des Verschlusses (103) in die topfförmige Vertiefung (83) des Braubehälters (3).

Der Verschluss (103) wird in einem Herstellungsgang gefertigt. Hiermit ist gemeint, dass sich der Verschluss (103) mit einer üblichen, universell einsetzbaren Spritzgussmaschine in einem Vorgang herstellen lässt. Solche Maschinen sind in der Lage, sowohl eingelegte Teile zu umspritzen als auch zwei unterschiedliche Materialien zu verwenden.

Der Federmechanismus (104) wird aus dem gleichen Material hergestellt wie die Blende (123) und wird zusammen mit ihr in einem Arbeitsschritt (Guss) gefertigt. Um Hinterschnitte zu vermeiden, besteht der Federmechanismus (104) aus einer Spirale mit einer halben Umdrehung. Der Verschließmechanismus (105) wird ohne die Maschine zu verlassen aus einem zweiten Material angespritzt (sog. 2K-Verfahren).

Wird die Blende (123) mit Federmechanismus (104) ebenfalls aus einem elastischen Material gefertigt, wird der gesamte Verschluss (103) in einem Guss gefertigt.

Der Verschluss (103) enthält einen breiten Stift (112) der in die breite Aussparung (111) des Braubehälters (3) greift und einen schmalen Stift (114) der in die schmale Aussparung (113) des Braubehälters (3) greift. So wird sichergestellt, dass der Verschluss (103) mit immer derselben Orientierung montiert wird.

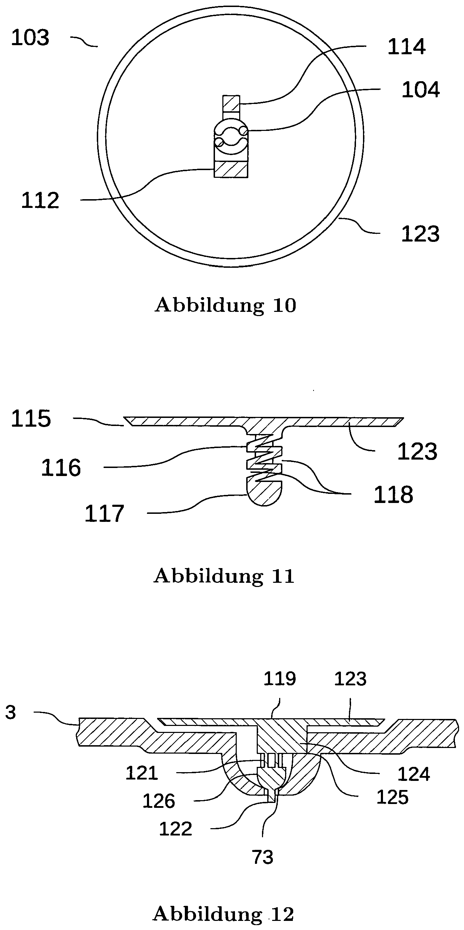

Eine vierte Ausführung des Verschlusses (103) wird in Abbildung 11 gezeigt. Verschluss (115) besteht aus Blende (123) mit mittig dem Zylinder (116), der durch die keilartigen Einschnitte (118) federt. Das Ende (117) des Zylinders (116) dient als Verschließmechanismus. Verschluss (115) ist ganzheitlich aus elastischem Material gefertigt.

Die fünfte Ausführung der Erfindung zeigen Abbildungen 12 bis 14. Hierin ist der Verschluss (119) vollständig aus einem elastischen Material geformt und wird mit den Steckrippen (124) in die passenden Aussparungen (125) in Braubehälter (3) gesteckt.

Die Federung geschieht durch die federnden Lamellen (121). Ihre Dicke und Form wird durch die genauen Anforderungen des Getränkebereiters bestimmt. Die gezeigten Lamellen (121) sind leicht gebogen, somit weist ihr Verhalten eine stärkere Hysterese auf.

Damit der Verschließmechanismus (126) nicht wegknickt und dadurch ungewünschtes Verhalten zeigt, ist er mit einem Führungsstift (122) versehen, der in das Ventilloch (73) ragt.

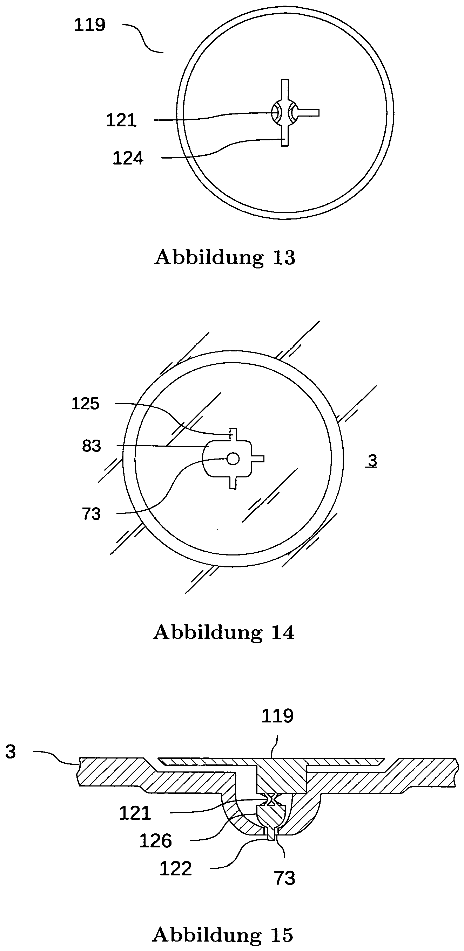

In Abbildung 15 wird die dritte Ausführung der Erfindung gezeigt, wenn der Druck im Braubehälter (3) über dem Auslösedruck der federnden Lamellen (121) liegt. Die Lamellen (121) verbiegen sich und der Verschließmechanismus (126) hebt sich. Der Führungsstift (122) ragt auch hier weiterhin weit genug in das Ventilloch (73) herein, um dem Verschließmechanismus (126) Führung zu geben.

Ist der Braubehälter (3) aus transparentem Material gefertigt, so wird der Bereich, in dem sich der druckregulierende Mechanismus befindet, auf der Innenseite des Braubehälters (3) mit einer Struktur versehen. Dies wird so ausgeführt, dass die technischen Komponenten für den Gebraucher nicht erkennbar sind.

## Patentansprüche

1. Sicherheitsvorrichtung (11) zur Begrenzung des Druckes in einem Braubehälter (3) für Getränke, der mindestens eine nach innen zeigende topfförmige Ausbildung (55) aufweist, wobei im Boden (75) der topfförmigen Ausbildung (55) mindestens ein Loch (73) enthalten ist und wobei in der topfförmigen Ausbildung (55) mindestens ein druckregulierender Mechanismus (76) vorhanden ist, **dadurch gekennzeichnet, dass** die topfförmige Ausbildung (55) mit einem Verschluss (19, 103, 115, 119) verschlossen ist und wobei zwischen Verschluss (19, 103, 115, 119) und Braubehälter (3) ein oder mehrere Dampfableitungskanäle (68) oder ein Dampfablassspalt (109) ausgebildet sind.

2. Vorrichtung nach Anspruch 1, **dadurch gekennzeichnet, dass** der Verschluss (19, 103, 115, 119) nach außen mit einer Blende (82, 123) versehen ist, wobei die Blende (82, 123) keine Löcher oder dergleichen aufweist, der Kontur des Braubehälters (3) folgt und den Braubehälter (3) plan verschließt.

3. Vorrichtung nach Anspruch 1 oder 2, **dadurch gekennzeichnet, dass** der Verschluss (19, 103, 115, 119) eine oder mehrere elektromagnetische Strahlung abschirmende Vorrichtungen (74) enthält, die Teile des oder den gesamten druckregulierenden Mechanismus (76) vor elektromagnetischer Strahlung teilweise oder vollständig abschirmen.

4. Vorrichtung nach Anspruch 1 oder 2, **dadurch gekennzeichnet, dass** für den Fall einer übermäßigen Druckerhöhung die topfförmige Ausbildung (55) mit einem zweiten druckregulierenden Mechanismus versehen ist, der so ausgestaltet ist, dass der Verschluss (19, 103, 115, 119) sich komplett vom Braubehälter (3) löst.

5. Vorrichtung nach einem der Ansprüche 1 bis 3, **dadurch gekennzeichnet, dass** der druckregulierende Mechanismus (76) permanent am Verschluss (19, 103, 115, 119) befestigt und Teil davon ist.

6. Vorrichtung nach Anspruch 5, **dadurch gekennzeichnet, dass** die Blende (82, 123) und ein Federmechanismus (104, 116, 121), der Teil des druckregulierenden Mechanismus (76) ist, aus einem Material bestehen.

7. Vorrichtung nach Anspruch 5, **dadurch gekennzeichnet, dass** der Verschluss (103, 115, 119) samt druckregulierenden Mechanismus (76) ganzheitlich aus einem Material besteht.

8. Vorrichtung nach Anspruch 1, **dadurch gekennzeichnet, dass** der Braubehälter (3) aus durchsichtigem Material besteht und Teile des Braubehälters (3) mit einer Struktur versehen sind, sodass diese Teile bei Betrachtung diffus bis undurchsichtig wirken.

9. Verfahren zum Herstellen einer Sicherheitsvorrichtung (11) zur Begrenzung des Druckes in einem Braubehälter (3) für Getränke, der mindestens eine nach innen zeigende topfförmige Ausbildung (55) aufweist, wobei im Boden (75) der topfförmigen Ausbildung (55) mindestens ein Loch (73) enthalten ist und wobei in der topfförmigen Ausbildung (55) mindestens ein druckregulierender Mechanismus (76) vorhanden ist, **dadurch gekennzeichnet, dass** zuerst der Braubehälter (3), der druckregulierende Mechanismus (76) und der Verschluss (19, 103, 115, 119) hergestellt werden und danach durch das Einstecken von zuerst des druckregulierenden Mechanismus (76) und danach des Verschlusses (19, 103, 115, 119) in die topfförmige Ausbildung (55) die Sicherheitsvorrichtung (11) zur Begrenzung des Druckes hergestellt wird.

10. Verfahren nach Anspruch 9, **dadurch gekennzeichnet, dass** der Verschluss (19, 103, 115, 119) samt druckregulierendem Mechanismus (76) vollständig in einem einzigen Herstellungsschritt gefertigt wird und danach durch das Einstecken des Verschlusses (19, 103, 115, 119) in die topfförmige Ausbildung (55) die Sicherheitsvorrichtung (11) zur Begrenzung des Druckes hergestellt wird.

## Claims

1. A safety device (11) for limiting the pressure in a brewing container (3) for beverages, which has at least one cup-shaped configuration (55) inwards, wherein at least one hole (73) is contained in the bottom (75) of the cup-shaped configuration (55), and wherein in the cup-shaped configuration (55) at least one (19, 103, 115, 119) pressure regulating mechanism (76) is provided, **characterized in that** the cup-shaped configuration (55) is closed with a closure (19, 103, 115, 119), and wherein one or more steam discharge ducts (68) or gaps (109) are arranged between the closure (19, 103, 115, 119) and the brewing container (3).

2. A device according to claim 1, **characterized in that** the closure (19, 103, 115, 119) is externally provided with a shutter (82, 123), the shutter (82, 123) having no holes or the like, follows the contour of the brewing container (3) and closes the brewing container (3) in a plane.

3. A device according to claim 1 or 2, **characterized in that** the closure (19, 103, 115, 119) contains one or more electromagnetic radiation shielding devices (74) which partially or completely shields the pressure regulating mechanism (76) from electromagnetic radiation.

4. A device according to claim 1 or 2, **characterized in that**, in the event of an excessive pressure increase, the cup-shaped configuration (55) is provided with a second pressure-regulating mechanism, which is designed such that the closure (19, 103, 115, 119) detaches completely from the brewing container (3).

5. A device according to one of claims 1 to 3, **characterized in that** the pressure-regulating mechanism (76) is permanently attached to the closure (19, 103, 115, 119) and is part thereof.

6. A device according to claim 5, **characterized in that** the shutter (82, 123) and a spring mechanism (104, 116, 121), which is part of the pressure-regulating mechanism (76), are made of the same material.

7. A device according to claim 5, **characterized in that** the closure (103, 115, 119), together with the pressure-regulating mechanism (76), consists entirely of a material.

8. A device according to claim 1, **characterized in that** the brewing container (3) is made of transparent material and parts of the brewing container (3) are provided with a structure so that these parts appear diffuse to opaque when viewed.

9. A method for producing a safety device (11) for limiting the pressure in a brewing container (3) for drinks, which has at least one inwardly projecting cup-shaped configuration (55), wherein at least one hole (73) is contained in the bottom (75) of the cup-shaped configuration (55), and wherein at least one pressure-regulating mechanism (76) is provided in the cup-shaped configuration (55), **characterized in that** the brewing container (3), the pressure-regulating mechanism (76) and the closure (19, 103, 115, 119) are produced first, and thereafter the safety device (11) for limiting the pressure is produced by the insertion first of the pressure-regulating mechanism (76) and then of the closure (19, 103, 115, 119) into the cup-shaped configuration (55).

10. Method according to Claim 9, **characterized in that** the closure (19, 103, 115, 119), together with the pressure-regulating mechanism (76), is produced completely in a single production step, and the safety device (11) for limiting the pressure is then produced by inserting the closure (19, 103, 115, 119) into the cup-shaped configuration (55).

## Revendications

1. Dispositif de sécurité (11) pour limiter la pression dans un récipient de brassage (3) pour boissons, comprenant au moins une forme en forme de pot (55) tourné vers l'intérieur, dans lequel au moins un trou (73) est prévu dans le fond (75) de la forme (55) en forme de pot, et dans lequel au moins un mécanisme de régulation de pression (76) est présent dans la forme en forme de pot (55), **caractérisé en ce que** la forme en forme de pot (55) est fermée avec une fermeture (19, 103, 115, 119), et dans lequel un ou plusieurs canaux de déviation de vapeur (68) ou une fente de sortie de vapeur (109) sont formés entre la fermeture (19, 103, 115, 119) et le récipient de brassage (3).

2. Dispositif selon la revendication 1, **caractérisé en ce que** la fermeture (19, 103, 115, 119) est prévue avec un panneau (82, 123) vers l'extérieur, dans lequel le panneau ne comprend (82, 123) pas de trous ou analogues, le panneau suit le contour du récipient de brassage (3) et ferme le récipient de brassage (3) de manière plane ou à plat.

3. Dispositif selon la revendication 1 ou 2, **caractérisé en ce que** la fermeture (19, 103, 115, 119) comprend un ou plusieurs dispositifs électromagnétiques de blindage de rayonnement (74), qui protègent partiellement ou complètement du rayonnement électromagnétique des parties ou l'ensemble du mécanisme de régulation de pression (76).

4. Dispositif selon la revendication 1 ou 2, **caractérisé en ce que** la forme en forme de pot (55) est pourvue d'un deuxième mécanisme de régulation de pression pour le cas d'une augmentation excessive de la pression, qui est conçu de telle sorte que la fermeture (19, 103, 115, 119) se désolidarise complètement du récipient de brassage (3).

5. Dispositif selon l'une des revendications 1 à 3, **caractérisé en ce que** le mécanisme de régulation de pression (76) est fixé de façon permanente à la fermeture (19, 103, 115, 119) et fait partie de celui-ci.

6. Dispositif selon la revendication 5, **caractérisé en ce que** le panneau (82, 123) et un mécanisme de ressort (104, 116, 121), qui fait partie du mécanisme de régulation de pression (76), sont constitués d'un seul matériau.

7. Dispositif selon la revendication 5, **caractérisé en ce que** la fermeture (103, 115, 119) conjointement avec le mécanisme de régulation de pression (76) est entièrement constitué d'un seul matériau.

8. Dispositif selon la revendication 1, **caractérisé en ce que** le récipient de brassage (3) est constitué d'un matériau transparent et des parties du récipient de brassage (3) sont pourvues d'une structure, de sorte que ces parties apparaissent de diffuses à opaques lorsqu'on les regarde.

9. Procédé de fabrication d'un dispositif de sécurité (11) pour limiter la pression dans un récipient de brassage (3) pour boissons, qui comprend au moins une forme en forme de pot (55) tourné vers l'intérieur, dans lequel au moins un trou (73) est prévu dans le fond (75) de la forme (55) en forme de pot, et dans lequel au moins un mécanisme de régulation de pression (76) est présent dans la forme en forme de pot (55), **caractérisé en ce que** le récipient de brassage (3), le mécanisme de régulation de pression (76) et la fermeture (19, 103, 115, 119) sont d'abord fabriquées et ensuite le dispositif de sécurité (11) pour limiter la pression est fabriqué par insertion, dans la forme en forme de pot (55), du mécanisme de régulation de pression (76) en premier, puis de la fermeture (19, 103, 115, 119),.

10. Procédé selon la revendication 9, **caractérisé en ce que** la fermeture (19, 103, 115, 119) ensemble avec le mécanisme de régulation de pression (76) est entièrement fabriquée en une seule étape de fabrication, et ensuite le dispositif de sécurité (11) pour limiter la pression est fabriqué en insérant la fermeture (19, 103, 115, 119) dans la forme en forme de pot (55).
